# EUROPEAN PATENT SPECIFICATION

(11) **EP 2 666 665 B1**
(45) Date of publication and mention of the grant of the patent: **11.07.2018**
(21) Application number: 12169414.5
(22) Date of filing: 25.05.2012
(51) Int. Cl.: B60N 2/28, B60P 7/08, B61D 45/00

(54) **A tether anchorage**
Leinenverankerung
Ancrage d'amarre

(43) Date of publication of application: 27.11.2013
(73) Proprietor: Volvo Car Corporation, 40 531 Göteborg (SE)
(72) Inventor: Svensson, Birger, 42932 Kullavik (SE); Zengin, Fatma, 46331 Lilla Edet (SE)
(74) Representative: Volvo Car Corporation

(56) References cited:
- DE-A1-102004 049 321
- US-A1- 2009 169 321

## Description

### FIELD OF THE INVENTION

The present invention relates to a tether anchorage for anchoring a child seat in a vehicle with a tether strap.

### BACKGROUND

There are various ways of fastening a child seat in a vehicle. A quite common way is to have some sort of anchoring structure in the floor of the vehicle and the child seat can be tethered to this structure. When this anchor is not in use it is desirable that it does not stand out or protrudes too much. There are also requirements regarding a minimum radius of parts in order to avoid passengers being hurt when in contact with these parts. For instance, there are metal anchors that do not themselves fulfil these requirements and are therefore provided with a cover for when they are not in use.

There are also solutions where the anchor systems are integrated into the floor of the vehicle. One example of this is disclosed in US 2002/0104190. In this document an anchor system is disclosed having an attachment point adjacent a base layer opening and a tether selectively detachably connected to the attachment point. A cover is provided that comprises a circumferential flange defining an opening therein, and operatively connected to the base layer opening. A cap is receivable within the circumferential flange opening and is rotatably attached to the circumferential flange and selectively movable about a pivot point from a closed position to an open position. A notch is defined in at least one of the flange and the cap. The notch allows the tether to pass therethrough when the cap is in the closed position. This solution is beneficial from a design point of view but requires preparation of the vehicle body that is time consuming.

A further example is disclosed in US 7,207,619 where a child seat tether anchor structure has a first end tether anchor, a second end tether anchor, an intermediate tether anchor, an anchoring tether, and a vehicle body mounting member with a height adjustment arrangement. The vehicle child seat attachment structures are secured to both the vehicle body and the frame. The vehicle child seat attachment structures are configured and arranged to move between a retracted position and an extended position. In the retracted position, the vehicle child seat attachment structures are covered by a carpet or other trim finishing material. Thus, this solution is also beneficial from a design point of view but requires even more preparation and thus more time arranging the system in a vehicle.

US 2009/0169321 A1 discloses a tether anchorage with a tether strap, the strap comprising two holes at such a distance from each other that when the strap is folded and when the parts of the strap with the holes meet, the strap forms a loop between the holes.

DE 10 2004 049 321 A1 discloses a unit that can be inserted into the backrest or the rigid cover behind the backrest of the rear seat of a vehicle. A rectangular housing with a flanged border is inserted into an opening prepared for the purpose and fixed with a threaded bolt. The backrest of the children's seat can be joined to a swivel mounted bow with a suitable device. When no seat is used, the bow is moved into a submersed position and covered by a lid, also swivel mounted to the housing. In Figures 5 and 6 it also discloses a folded strap 19 with folded edges between the holes of the strap.

### SUMMARY OF THE INVENTION

The object of the present invention is to provide a tether anchorage for a child seat that is cheap, easy to install and that fulfils all requirements.

This object is achieved by a tether anchorage as set forth in the appended claims.

According to the present invention a tether anchorage for anchoring a child seat in a vehicle with a tether strap comprising a folded strap, the strap comprising two holes at such a distance from each other that when the strap is folded and when the parts of the strap with the holes meet, the strap forms a loop between the holes, wherein the edges of a portion of the part of the strap between the holes are folded such that a waist is formed on the strap and wherein the strap is woven. Since the loop is softer than for instance the more common anchor made of steel, the anchor according to the present invention could be arranged such that it is always visible and there is also no need for it to be covered when not in use since there are no sharp and hard edges on it.

Generally a child seat comes with a sort of spring safety hook that should be "connected" to the tether anchorage. These hooks are usually curved and it is thus more suitable for strength reasons to have a strap that is not too wide since this might give a disadvantageous load situation.

According to a further aspect of the present invention the end parts of the strap adjacent the holes are joined. In other words the strap makes a loop such that both ends of the strap point in the same direction. With this arrangement rather than having the strap forming a spiral loop, the load conditions are more advantageous for the strap.

According to yet another aspect of the present invention the end parts of the strap are joined with a seam. Alternatives could be an adhesive, welding etc. Depending on material of the strap a proper attachment could be chosen. With a woven strap a fairly simple and cost effective joining is however with a seam.

For increased load distribution each end of the strap comprises a further hole according to one aspect of the present invention and wherein each end of the strap is folded such that the holes are co-axial.

According to a further aspect of the present invention the ends of the strap are folded towards one another and all four holes are co-axial. The ends of the strap being folded towards one another create a distance between the ends of the strap at the beginning of the loop. Having all four holes co-axial makes it possible to fasten the anchorage only using one bolt or equivalent device.

For improving the load distribution the tether anchorage according to another aspect of the present invention further comprises a washer of a solid material arranged co-axial with the holes of the ends of the strap and having a width corresponding to the width of the strap.

According to one aspect of the present invention where the ends of the strap are folded a washer of a solid material is arranged co-axial with the holes of the ends of the strap and having a width corresponding to the width of the strap, and wherein the washer is arranged in between one end's fold. Alternatively, a second washer is arranged in the other end's fold. The load from the attachment holes of the strap is by having a washer better distributed across the width of the strap.

According to another aspect of the present invention the washer is made of a plastic material. A plastic washer is lightweight and fairly easy to produce.

According to yet another aspect of the present invention the holes are circular. Thus, when the tether anchorage is fastened to a vehicle with a screw the hole can be made to fit the outer diameter of the screw and therefore the diameter of the hole can be kept at a minimum.

According to a further aspect of the present invention a vehicle is provided with a tether anchorage according to the above , wherein the tether anchorage is fastened to the vehicle body with a captive washer screw.

The tether anchorage is according to one aspect of the invention arranged on the floor of the vehicle.

### BRIEF DESCRIPTION OF THE DRAWINGS

The invention will now be further disclosed with reference to the accompanying drawings.
Figure 1 is a perspective view of a tether anchorage according to the present invention.
Figure 2 is a side view of a part of the tether anchorage shown in figure 1.
Figure 3 is a side view of the tether anchorage shown in figure 1.
Figure 4 is a top view of the tether anchorage shown in figure 1.

### DISCLOSURE OF PREFERRED EMBODIMENTS

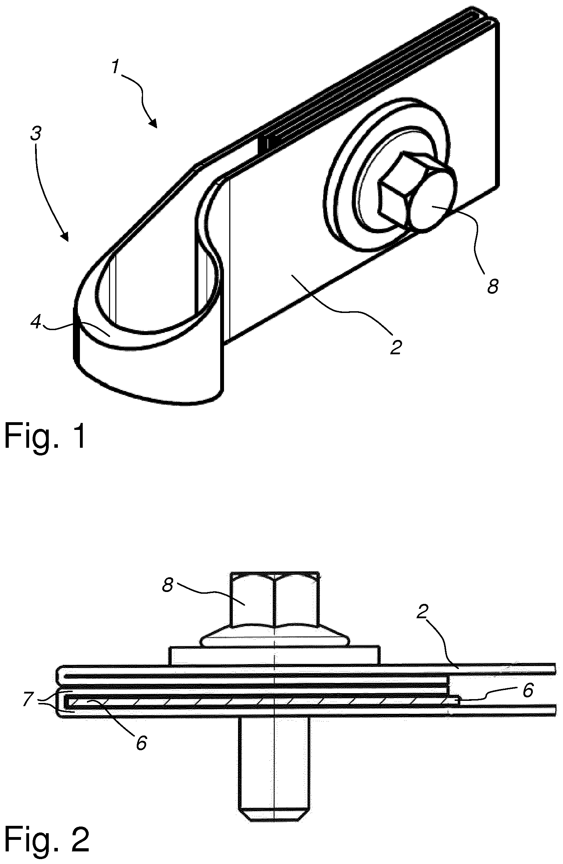

In figure 1 a tether anchorage 1 for anchoring a child seat in a vehicle with a tether strap can be seen. The tether anchorage comprises a strap 2 and the strap 2 comprises two holes such that the strap 2 forms a loop 3 between the holes. A part of the strap 2 between the holes is folded such that a waist 4 is formed on the strap 2. Also shown in the figure is a captive washer screw 8 that can be screwed to the body of a vehicle and thus hold the tether anchorage 1.

Figure 2 shows a part of the tether anchorage 1 from the side. As can be seen the ends of the strap 2 are folded towards one another and the holes are co-axial to allow for only one screw 8 to hold the tether anchorage 1.
A plastic washer 6 can also be seen arranged co-axial with the holes of the ends of the strap and having a width corresponding to the width of the strap 2, and wherein the washer 6 is arranged in between one end's fold 7. This helps distributing the load across the width of the strap 2 instead of a part of the strap adjacent the hole(s) taking all the load. Washer in the context of the invention does not exclude other forms than the traditional circular washers, they could have any outer shape. In fact, the washer 7 shown in the drawings is rectangular.

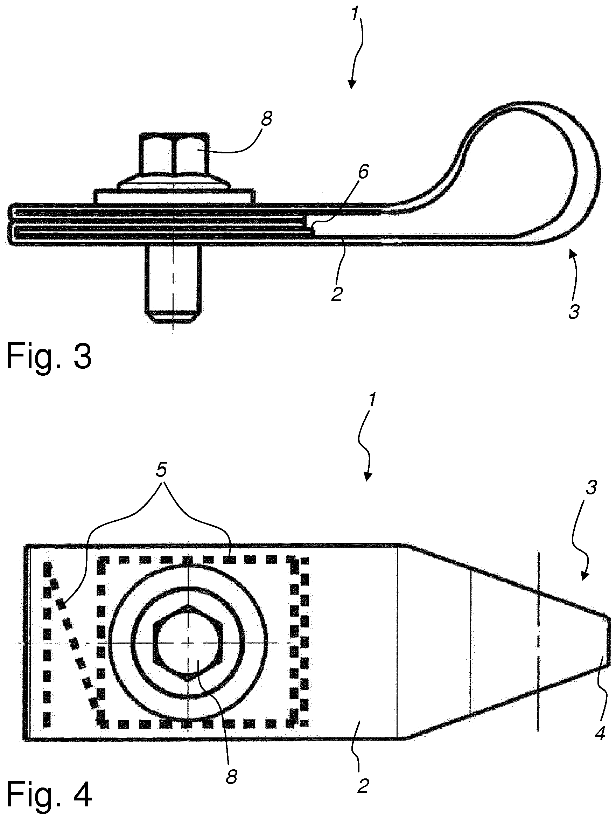

Compared to figure 2, figure 3 shows the entire tether anchorage 1 from the side. The ends of the strap 2 being folded towards one another creates a gap between the strap parts where the loop 3 starts. Thus, the loop 3 is better defined and easier to grip with this arrangement. Also, the waist 4 could be made such that the loop 3 points upwards as shown in figure 3 further improving the handling.

In figure 4 the tether anchorage 1 is shown from above and seams 5 are visualized that joins the upper end of the strap 2 after it is being folded. The design of the seams 5 could of course be varied. Also, in the shown embodiment the strap 2 is a woven strap which makes the seams 5 suitable for joining the strap end on the upper end of the strap 2.

The foregoing is a disclosure of an example practicing the present invention. However, it is apparent that modifications and variations will be obvious to one skilled in the art, as long as they fall within the scope of the claims. For instance, the washer described could be made from various materials such as a metal. Also, the embodiment shown in the drawings have only one washer but there could be a second washer. Further, the washer could be arranged between the folds of both strap ends which also would allow for each end of the strap to be joined when folded.

## Claims

1. A tether anchorage (1) for anchoring a child seat in a vehicle with a tether strap, comprising a folded strap (2), the strap (2) comprising two holes at such a distance from each other that when the strap (2) is folded and when the parts of the strap with the holes meet, the strap (2) forms a loop (3) between the holes,
**characterised in**
**that** the edges of a portion of the part of the strap (2) between the holes are folded such that a waist (4) is formed on the strap and wherein the strap (2) is woven.

2. A tether anchorage (1) according to claim 1, wherein the end parts of the strap (2) are joined with a seam (5).

3. A tether anchorage (1) according to any of the previous claims, wherein each end of the strap (2) comprises a further hole and wherein each end of the strap (2) is folded such that the holes are co-axial.

4. A tether anchorage (1) according to claim 3, wherein the ends of the strap (2) are folded towards one another and all four holes are co-axial.

5. A tether anchorage (1) according to any of the preceding claims, further comprising a washer (6) of a solid material arranged co-axial with the holes of the ends of the strap and having a width corresponding to the width of the strap (2).

6. A tether anchorage (1) according to any of the claims 3 and 4, wherein a washer (6) of a solid material is arranged co-axial with the holes of the ends of the strap and having a width corresponding to the width of the strap (2), and wherein the washer (6) is arranged in between one end's fold (7).

7. A tether anchorage (1) according to claim 6, further comprising a second washer arranged in the other end's fold.

8. A tether anchorage (1) according to any of the claim 5 to 7, wherein the washer (6) is made of a plastic material.

9. A tether anchorage (1) according to any of the previous claims, wherein the holes are circular.

10. A vehicle provided with a tether anchorage (1) according to any of the previous claims, wherein the tether anchorage (1) is fastened to the vehicle body with a captive washer screw (8).

11. A vehicle according claim 10, wherein the tether anchorage (1) is arranged on the floor of the vehicle.

## Patentansprüche

1. Haltegurtverankerung (1) zum Verankern eines Kindersitzes in einem Fahrzeug mit einem Haltegurt, umfassend einen zusammengefalteten Gurt (2), wobei der Gurt (2) zwei Löcher in einem derartigen Abstand voneinander umfasst, dass, wenn der Gurt (2) zusammengefaltet ist und wenn die die Löcher aufweisenden Teile des Gurts aufeinandertreffen, der Gurt (2) eine Schleife (3) zwischen den Löchern bildet,
**dadurch gekennzeichnet, dass** die Kanten eines Abschnitts des Teils des Gurts (2) zwischen den Löchern auf eine solche Weise gefaltet sind, dass ein Mittelstück (4) auf dem Gurt ausgebildet ist, und wobei der Gurt (2) gewebt ist.

2. Haltegurtverankerung (1) nach Anspruch 1, wobei die Endteile des Gurts (2) mit einer Naht (5) verbunden sind.

3. Haltegurtverankerung (1) nach einem der vorhergehenden Ansprüche, wobei jedes Ende des Gurts (2) ein weiteres Loch umfasst und wobei jedes Ende des Gurts (2) auf eine solche Weise gefaltet ist, dass die Löcher koaxial sind.

4. Haltegurtverankerung (1) nach Anspruch 3, wobei die Enden des Gurts (2) zueinander hin gefaltet sind und alle vier Löcher koaxial sind.

5. Haltegurtverankerung (1) nach einem der vorhergehenden Ansprüche, ferner umfassend eine Unterlegscheibe (6) aus einem stabilen Material, die koaxial mit den Löchern der Enden des Gurts angeordnet ist und eine Breite aufweist, die der Breite des Gurts (2) entspricht.

6. Haltegurtverankerung (1) nach einem der Ansprüche 3 und 4, wobei eine Unterlegscheibe (6) aus einem stabilen Material koaxial mit den Löchern der Enden des Gurts angeordnet ist und eine Breite aufweist, die der Breite des Gurts (2) entspricht, und wobei die Unterlegscheibe (6) zwischen der Faltung (7) eines Endes angeordnet ist.

7. Haltegurtverankerung (1) nach Anspruch 6, ferner umfassend eine zweite Unterlegscheibe, die in der Faltung des anderen Endes angeordnet ist.

8. Haltegurtverankerung (1) nach einem der Ansprüche 5 bis 7, wobei die Unterlegscheibe (6) aus einem Kunststoffmaterial hergestellt ist.

9. Haltegurtverankerung (1) nach einem der vorhergehenden Ansprüche, wobei die Löcher kreisrund sind.

10. Fahrzeug, versehen mit einer Haltegurtverankerung (1) nach einem der vorhergehenden Ansprüche, wobei die Haltegurtverankerung (1) mit einer Schraube (8) mit unverlierbarer Unterlegscheibe an dem Fahrzeugaufbau befestigt ist.

11. Fahrzeug nach Anspruch 10, wobei die Haltegurtverankerung (1) auf dem Boden des Fahrzeugs angeordnet ist.

## Revendications

1. Ancrage (1) par sangle pour ancrer un siège d'enfant dans un véhicule avec une bande de sangle, comprenant une bande (2) pliée, la bande (2) comprenant deux trous séparés par une distance telle que, quand la bande (2) est pliée et que les parties de la bande avec les trous se rejoignent, la bande (2) forme une boucle (3) entre les trous,
**caractérisé en ce que** les bords d'une fraction de la partie de la bande (2) entre les trous sont pliés de telle sorte qu'un rétrécissement (4) se forme sur la bande, et
dans lequel la bande (2) est tissée.

2. Ancrage (1) par sangle selon la revendication 1, dans lequel les parties terminales de la bande (2) sont assemblées par une couture (5).

3. Ancrage (1) par sangle selon l'une quelconque des revendications précédentes, dans lequel chaque extrémité de la bande (2) comprend un trou supplémentaire et dans lequel chaque extrémité de la bande (2) est repliée de telle sorte que les trous soient coaxiaux.

4. Ancrage (1) par sangle selon la revendication 3, dans lequel les extrémités de la bande (2) sont repliées l'une vers l'autre et tous les quatre trous sont coaxiaux.

5. Ancrage (1) par sangle selon l'une quelconque des revendications précédentes, comprenant en outre une rondelle (6) faite d'une matière solide, disposée coaxialement avec les trous des extrémités de la bande et ayant une largeur qui correspond à la largeur de la bande (2).

6. Ancrage (1) par sangle selon la revendication 3 ou 4, dans lequel une rondelle (6) faite d'une matière solide est disposée coaxialement avec les trous des extrémités de la bande et a une largeur qui correspond à la largeur de la bande (2), et dans lequel la rondelle (6) est disposée entre les plis (7) d'une extrémité.

7. Ancrage (1) par sangle selon la revendication 6, comprenant en outre une seconde rondelle disposée dans le pli de l'autre extrémité.

8. Ancrage (1) par sangle selon l'une quelconque des revendications 5 à 7, dans lequel la rondelle (6) est faite d'une matière plastique.

9. Ancrage (1) par sangle selon l'une quelconque des revendications précédentes, dans lequel les trous sont circulaires.

10. Véhicule équipé d'un ancrage (1) par sangle selon l'une quelconque des revendications précédentes, dans lequel l'ancrage (1) par sangle est fixé à la carrosserie du véhicule par une vis (8) à rondelle imperdable.

11. Véhicule selon la revendication 10, dans lequel l'ancrage (1) par sangle est disposé sur le plancher du véhicule.
